# FASCICULE DE BREVET EUROPEEN

(11) **EP 0 808 858 B1**
(45) Date de publication et mention de la délivrance du brevet: **09.01.2002**
(21) Numéro de dépôt: 97113950.6
(22) Date de dépôt: 27.04.1993
(51) Int. Cl.: C08F 297/08, C08F 110/06, C08F 210/16

(54) **Système catalytique pour la polymérisation d'oléfines procédé pour cette polymérisation et polymères ainsi obtenus**
Olefinpolymerisationskatalysatorsystem, Verfahren zu dieser Polymerisation und so erhaltene Polymere
Olefin polymerization catalyst system, process for this polymerization and polymers obtained thereby

(30) Priorité: 04.05.1992 BE 9200412
(43) Date de publication de la demande: 26.11.1997
(62) Demande divisionnaire de: 93201204.0
(73) Titulaire: Solvay Polyolefins Europe-Belgium (Société Anonyme), 1050 Bruxelles (BE)
(72) Inventeur: Costa, Jean-Louis, 1850 Grimbergen (BE); Pamart, Sabine, 1780 Wemmel (BE); Hallot, Gaetane, 1853 Strombeek (BE)
(74) Mandataire: Troch, Geneviève

(56) Documents cités:
- EP-A- 0 114 391
- EP-A- 0 145 368
- EP-A- 0 174 863
- EP-A- 0 424 145
- EP-A- 0 485 006
- DE-A- 3 220 974
- GB-A- 2 053 246
- MAIYER YE A ET AL: "PROPERTIES OF POLYPROPYLENE SYNTHESIZED ON A TITANIUM-MAGNESIUM CATALYST*" POLYMER SCIENCE USSR, vol. 33, no. 5, 1 janvier 1991, pages 924-930, XP000245814

## Description

La présente invention s'étend également aux polymères du propylène et compositions en comprenant ainsi qu'aux articles façonnés les contenant.

Il est connu de polymériser stéréospécifiquement des alpha-oléfines en phase gazeuse, au moyen d'un système catalytique comprenant un constituant solide à base de trichlorure de titane et un activateur à base d'un composé organométallique. Cependant, en raison de la nature des systèmes catalytiques habituellement utilisés, les polymères du propylène obtenus par ces procédés sont en général fortement isotactiques, et donc assez rigides, ce qui n'est pas toujours souhaitable, notamment dans des applications d'emballage ou exigeant une bonne résistance aux chocs.

Ainsi, dans le brevet BE-A-551276 (Montecatini & Ziegler), l'utilisation d'un système catalytique à base de TiCl₃ conjointement au triéthylaluminium (TEAL) conduit, par polymérisation en phase gazeuse, à l'obtention de polypropylène fortement cristallin.

La morphologie du catalyseur utilisé a une influence déterminante sur les propriétés des polymères obtenus. Le procédé décrit dans le brevet BE-A-773888 (BASF), par exemple, qui utilise un autre système catalytique à base de TiCl₃, également en combinaison avec du TEAL, peut conduire par polymérisation en phase gazeuse à l'obtention de polypropylène présentant une isotacticité inférieure, mais au prix d'une activité médiocre, d'une morphologie hétérogène des poudres et généralement de problèmes de collage, surtout lorsque l'on tente de produire des résines de faible isotacticité. Il est clair qu'une faible activité a notamment comme conséquence une teneur importante en résidus catalytiques, ce qui peut exclure certaines applications exigeant des résines de grande pureté.

Par ailleurs, on a également proposé (brevet EP-0202946 de Sumitomo Chemical) des systèmes catalytiques présentant une porosité élevée dans une plage de rayons de pores bien précise. Les méthodes de préparation des catalyseurs décrites dans ce brevet sont toutefois compliquées, et les cocatalyseurs les plus appropriés à ce procédé sont des composés organoaluminiques chlorés tels que le chlorure de diéthyl-aluminium, Al(C₂H₅)₂Cl, appelé par la suite DEAC, ce qui a pour conséquence une importante teneur en chlore des résines.

En résumé, les procédés de polymérisation en phase gazeuse du propylène connus jusqu'ici, et plus précisément les systèmes catalytiques qu'ils utilisent, présentent de nombreux inconvénients lorsque l'objectif est d'obtenir des polymères du propylène de faible rigidité, notamment :
- une faible activité, d'où une teneur élevée en résidus catalytiques;
- la difficulté d'ajuster l'indice d'isotacticité jusqu'à de faibles valeurs;
- la difficulté d'obtenir des résines présentant à la fois une faible isotacticité et une bonne coulabilité (problèmes de collage);
- la difficulté d'obtenir des copolymères incorporant une proportion élevée d'éthylène sans provoquer également des problèmes de collage;
- la difficulté d'obtenir des grains de polymère de morphologie externe contrôlable (diamètre moyen, distribution granulométrique, forme, etc.).

On a maintenant trouvé des systèmes catalytiques n'engendrant plus les inconvénients précités lorsqu'ils sont utilisés pour la polymérisation d'oléfines telles que le propylène.

Plus particulièrement l'utilisation, dans un procédé de fabrication en phase gazeuse d'homopolymères ou de copolymères statistiques ou à blocs du propylène, de systèmes catalytiques selon la présente invention, comprenant un solide catalytique à base de TiCl₃ complexé d'un type particulier et un cocatalyseur organoaluminique particulier, offre plusieurs avantages inattendus.

Une caractéristique des systèmes catalytiques utilisés pour obtenir les polymères de la présente invention est leur faible stéréospécificité. Ceci conduit à une incorporation moins stéréospécifique du propylène dans les chaînes polymériques. Un premier avantage de ce système est donc que l'indice d'isotacticité minimal que l'on peut maintenant atteindre est significativement plus faible que les valeurs obtenues avec les systèmes catalytiques connus. En effet, si l'on utilise ces systèmes catalytiques, on peut notamment obtenir des homopolymères du propylène dont l'indice d'isotacticité (mesuré par RMN) peut être réglé d'environ 87 % à environ 60 %. Il permet également d'obtenir des copolymères à blocs constitués d'au moins :
- un bloc d'homopolymère faiblement isotactique du propylène (tel que décrit ci-dessus) ou de copolymère statistique contenant au moins 90 % de propylène, et
- un bloc d'un copolymère statistique propylène-éthylène qui, lorsque l'on vise une bonne résistance aux chocs, contient de préférence environ 40 à 60 % en poids d'éthylène.

La combinaison de ces deux types de blocs permet d'obtenir des produits particulièrement peu rigides et présentant un bon comportement au choc.

Un deuxième avantage des systèmes catalytiques utilisés pour obtenir les polymères de l'invention est qu'ils permettent d'obtenir des poudres de polymère de morphologie contrôlée, en l'occurrence d'excellente coulabilité. Cet avantage obtenu moyennant le choix d'un solide catalytique de morphologie adéquate, est particulièrement sensible pour les homopolymères faiblement isotactiques et pour les copolymères à teneur élevée en comonomère. Ainsi, les copolymères à blocs peuvent être relativement riches (jusqu'à 70 % en poids) en bloc(s) de copolymère statistique, le(s)quel(s) constitue(nt) généralement, surtout dans le cas particulier de copolymères propylène-éthylène dont la proportion d'éthylène est d'environ 50 %, un produit amorphe et collant susceptible de provoquer le blocage des réacteurs de polymérisation.

Un troisième avantage des systèmes catalitiques utilisés pour obtenir les polymères de l'invention est qu'un ajustement très simple des conditions opératoires, à savoir celui du rapport molaire Al/Ti entre cocatalyseur et catalyseur, permet de faire varier dans une large plage l'indice d'isotacticité des polymères obtenus. Ainsi, dans le cas d'homopolymères du propylène, l'indice d'isotacticité peut être supérieur ou égal à environ 60 %, de préférence supérieur ou égal à 65 %. Par ailleurs, cet indice d'isotacticité est généralement inférieur ou égal à 87 %, de préférence inférieur ou égal à 85 %.

Un quatrième avantage des systèmes catalytiques utilisés pour obtenir les polymères de l'invention est qu'ils permettent, lorsqu'ils sont mis en oeuvre en l'absence d'agents de transfert tels que l'hydrogène, de produire des polymères de très hautes masses moléculaires (appelés plus simplement UHMW PP par la suite), et ce non seulement avec une activité très élevée, mais également avec un très important gain d'activité par rapport aux cas où des agents de transfert sont présents.

Un cinquième avantage des systèmes catalytiques utilisés pour obtenir les polymères de l'invention est que leur activité catalytique considérable conduit à des résines contenant très peu de résidus catalytiques (Ti). Par ailleurs, le choix du cocatalyseur réduit également la teneur en chlore des résines.

Un sixième avantage de l'invention est que la morphologie des poudres produites au départ de catalyseurs déposés sur un support minéral peut être contrôlée par le choix de ce support. Ceci permet d'optimiser leur granulométrie ainsi que leur comportement en fluidisation dans le procédé phase gazeuse.

Enfin, les polymères obtenus par ces procédés présentent une enthalpie de fusion fortement réduite (jusqu'à environ 30 J/g pour les copolymères statistiques du propylène, et environ 60 à 80 J/g pour les homopolymères du propylène), ce qui facilite leur mise en oeuvre. Les polymères ont en outre généralement une bonne transparence, ce qui les rend avantageux dans certaines applications telles que l'emballage.

A cet effet, pour obtenir les polymères de la présente invention on utilise des systèmes catalytiques qui comprennent un solide catalytique à base de TiCl₃ et un cocatalyseur organométallique, dans lesquels le cocatalyseur est un composé organoaluminique non-halogéné et le solide catalytique est du trichlorure de titane complexé obtenu par traitement thermique, en présence d'un agent d'activation halogéné, du matériau liquide résultant de la mise en contact de TiCl₄, prétraité par un composé électrodonneur, avec une composition (C) correspondant à la formule générale

Al Rₚ (Y)_{q} X_{3-(p+q)} (I)

dans laquelle
- R représente un radical hydrocarboné,
- Y représente un groupement choisi parmi -OR', -SR' et -NR'R" dans lesquels R' et R" représentent chacun un radical hydrocarboné ou un atome d'hydrogène,
- X représente un halogène,
- p est un nombre quelconque tel que 0 < p < 3 et
- q est un nombre quelconque tel que 0 < q < 3, la somme p+q étant telle que 0 < p+q ≤ 3.

Dans ces systèmes catalytiques , R, R' et R" sont, lorsqu'ils représentent un radical hydrocarboné, généralement choisis indépendamment l'un de l'autre parmi :
- les radicaux alkyles linéaires ou branchés, contenant de 1 à 12 atomes de carbone, par exemple les radicaux méthyle, éthyle, n-propyle, isopropyle, n-butyle, isobutyle, n-amyle, isoamyle, n-hexyle, 2-éthylhexyle, n-octyle;
- les radicaux alcényles contenant en général de 2 à 12 atomes de carbone par exemple les radicaux éthényle, 1-butényle, 2-butényle, 2-pentényle, 1-octényle, 1-décényle;
- les radicaux cycloalkyles, éventuellement substitués, contenant en général de 5 à 12 atomes de carbone, par exemple les radicaux cyclopentyle, cyclohexyle, méthyl cyclohexyle, cyclooctyle;
- les radicaux aryles, éventuellement substitués, contenant en général de 6 à 35 atomes de carbone, par exemple les radicaux phényle, tolyle, crésyle, xylyle, naphtyle, 2,6-di-tert-butyl-4-méthyl phényle;
- les radicaux arylalkyles contenant en général de 7 à 20 atomes de carbone, par exemple le radical benzyle.

Dans la formule (I), X est de préférence le chlore; R est choisi de préférence parmi les radicaux alkyles linéaires ou branchés contenant de 2 à 8 atomes de carbone; Y est choisi de préférence parmi les groupements -OR' dans lesquels R' est un radical alkyle contenant de 1 à 12 atomes de carbone ou un radical aryle contenant de 6 à 35 atomes de carbone. Un radical R particulièrement préféré est le radical éthyle. Des radicaux R' particulièrement préférés sont les radicaux éthyle et amyles.

Dans la formule (I), p est de préférence un nombre tel que 1 ≤ p ≤ 2, et q de préférence un nombre tel que 0,1 ≤ q ≤ 2, et tout particulièrement tel que 0,15 ≤ q ≤ 0,65.

Les compositions (C) de formule (I) utilisées pour préparer les solides catalytiques peuvent être des composés chimiques définis ou des mélanges de composés. La formule (I) doit donc être considérée comme une formule de structure brute représentant lesdits composés ou, dans le cas de mélanges, représentant la composition moyenne de ces derniers.

Les compositions (C) peuvent être préparées à partir de composés organoaluminiques (A) de formule générale

Al Rₙ X₃₋ₙ (II)

dans laquelle R et X ont respectivement les significations données ci-dessus en rapport avec la formule (I), et dans laquelle n est un nombre quelconque tel que 0 < n ≤ 3, de préférence tel que 1 ≤ n ≤ 3.

A titre d'exemples de composés (A), on peut citer les composés alkylés de l'aluminium tels que les trialkylaluminiums, les monohalogénures de dialkylaluminiums et les di- et sesquihalogénures d'alkylaluminiums dont les radicaux alkyles sont ceux définis et énumérés plus haut, ainsi que leurs mélanges. Des composés (A) préférés sont les chlorures de dialkylaluminiums, tout particulièrement le chlorure de diéthylaluminium (DEAC), ainsi que les mélanges de ces produits avec au moins un produit choisi parmi les dichlorures de monoalkylaluminiums, les trialkylaluminiums et les sesquichlorures d'alkylaluminiums.

Pour la préparation de la composition (C), le composé (A) peut être mis en contact avec un composé (B) choisi parmi les composés de formule :

- Al (R)ₘ (Y)_{m'} X_{3-(m+m')} (III),

ou

- YH (IV),

et parmi les oligomères de type aluminoxanne, se présentant sous forme cyclique et/ou linéaire, pouvant être représentés par les formules générales

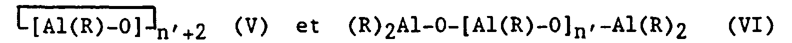

Dans les formules (III), (IV), (V) et (VI) ci-dessus, R, Y et X ont respectivement les significations données ci-avant en rapport avec la formule (I). Dans la formule (III), m est un nombre quelconque tel que 0 ≤ m < 3, de préférence tel que 0,5 ≤ m ≤ 1,5; m' est un nombre quelconque tel que 0 < m' ≤ 3, de préférence tel que 1 ≤ m' ≤ 2; la somme m+m' étant telle que 0 < m+m' ≤ 3. Dans les formules (V) et (VI), n' est un nombre entier généralement de 2 à 50.

A titre d'exemples de composés (B) de formule (III), on peut citer les trialkoxyaluminiums, les alkylalkoxyaluminiums, les halogénures d'alkoxyaluminiums et les halogénures d'alkylalkoxyaluminiums, ainsi que leurs mélanges. Les composés (B) de formule (III) préférés sont les alkylalkoxyaluminiums et leurs chlorures, tout particulièrement le diéthyléthoxyaluminium et les monochlorures d'éthyléthoxy- et d'éthylisopentoxyaluminium. A titre d'exemples de composés (B) de formule (IV), on peut citer les alcools, les thioalcools, les phénols, les thiophénols et les amines secondaires, ainsi que leurs mélanges. Les composés de formule (IV) préférés sont les alcools aliphatiques, par exemple le méthanol, l'éthanol, le propanol, l'isopropanol, le butanol, l'isobutanol, le pentanol, le 3-méthyl-1-butanol (alcool isoamylique), l'hexanol, le 2-éthyl-hexanol, l'octanol. Des alcools tout particulièrement préférés sont l'éthanol et les alcools n- et iso-amyliques.

A titre d'exemples de composés (B) de formules (V) et (VI), on peut citer les méthyl-, éthyl- et butylaluminoxannes, ainsi que leurs mélanges.

Les composés (A) et (B) définis ci-dessus sont mis en contact dans des proportions propres à l'obtention d'une composition (C) correspondant à la formule (I).

Un mode opératoire particulièrement préféré et simple de préparation de la composition (C) comprend la mise en contact d'un composé (A) qui est un composé alkylé de l'aluminium avec un composé (B) qui est un alcool aliphatique, dans un rapport entre l'aluminium contenu dans le composé (A) et le radical hydrocarboné contenu dans le composé (B) toujours supérieur à 1/3 et en général inférieur à 10.

Les autres conditions générales de préparation de la composition (C) ne sont pas critiques. En général, on opère en phase liquide, par exemple en mélangeant entre eux le composé, (A) et le composé (B), au moins l'un d'entre eux étant souvent liquide dans des conditions normales de température et de pression. On peut aussi opérer en présence d'un diluant hydrocarboné inerte, généralement choisi parmi les hydrocarbures aliphatiques, cycloaliphatiques et aromatiques liquides, tels que les alcanes, cycloalcanes ou isoalcanes liquides, ou le benzène, ainsi que leurs mélanges. Dans ce cas, la composition (C) est généralement présente dans ce diluant à raison de 1 à 50 % en volume, de préférence de 5 à 30 % en volume.

Les composés (A) et (B) peuvent être mis en contact à des températures d'environ 0 à 90°C, de préférence de 20 à 50°C environ, et leur mélange maintenu pendant un temps suffisant pour permettre l'achèvement de toute réaction chimique éventuelle, généralement d'environ 5 minutes à 100 heures, de préférence de 2 à 24 heures.

Pour la préparation des solides catalytiques, la composition (C) est mise en contact avec TiCl₄, lui-même prétraité par un composé électrodonneur. Ce composé électrodonneur est en général choisi parmi les composés organiques comprenant un ou plusieurs atomes ou groupements présentant une ou plusieurs paires d'électrons libres susceptibles d'assurer la coordination avec le titane. Ces composés présentent de 1 à 30 atomes de carbone par atome ou groupement donneur d'électrons.

Parmi les atomes susceptibles de donner une ou plusieurs paires d'électrons, on peut citer les atomes des non-métaux des groupes V et VI du Tableau Périodique tels que par exemple l'oxygène, le soufre, l'azote, le phosphore, l'antimoine et l'arsenic.

A titre d'exemples représentatifs des composés comprenant des groupements susceptibles de donner une ou plusieurs paires d'électrons, on peut citer les éthers, les thioéthers, les thiols, les phosphines, les stibines, les arsines, les amines, les amides, les cétones et les esters. De préférence, le composé électrodonneur est choisi dans la famille des éthers aliphatiques, et plus particulièrement parmi ceux dont les radicaux aliphatiques comprennent de 2 à 8 atomes de carbone, de préférence 4 à 6 atomes de carbone. Un exemple typique d'éther aliphatique donnant de très bons résultats est l'éther diisoamylique. L'éther di-n-butylique convient également.

Les conditions générales du traitement du TiCl₄ par le composé électrodonneur ne sont pas critiques, pour autant qu'elles induisent une complexation du TiCl₄ par le composé électrodonneur. On procède en général en phase liquide, en ajoutant le composé électrodonneur, éventuellement dissous dans un diluant hydrocarboné inerte tel que défini plus haut, au TiCl₄, lui-même sous forme liquide pure ou dissous dans un tel diluant. Lorsqu'il est fait usage d'un diluant, le TiCl₄ y est généralement présent à raison d'environ 1 à 50 % en volume, de préférence de 5 à 30 % en volume. Le traitement du TiCl₄ par le composé électrodonneur s'effectue à une température généralement d'environ 0°C à la température d'ébullition du TiCl₄ ou de l'éventuel diluant, de préférence de 5 à 40°C.

Le rapport molaire entre le TiCl₄ et le composé électrodonneur peut varier dans de larges mesures. Il est généralement d'environ 0,01 mole à 20 moles de TiCl₄ par mole de composé électrodonneur, de préférence de 0,2 à 10 moles par mole, tout particulièrement de 0,3 à 5.

Les conditions générales de mise en contact du TiCl₄, prétraité par le composé électrodonneur comme décrit ci-avant (appelé ci-après plus brièvement "TiCl₄ prétraité"), avec la composition (C) ne sont pas critiques non plus, pour autant qu'elles conduisent à la formation d'un matériau liquide substantiellement homogène et exempt de solide. En général, on introduit la composition (C), sous forme liquide pure ou sous forme diluée dans un diluant hydrocarboné inerte tel que défini plus haut, dans le TiCl₄ prétraité, lui-même sous forme liquide ou dilué dans un diluant hydrocarboné inerte, éventuellement différent du précédent.

La composition (C) et le TiCl₄ prétraité sont mis en contact dans des proportions telles qu'il se produise une réduction au moins partielle du TiCl₄ sans production substantielle concomittante de précipité solide. A cet effet, la quantité de composition (C) mise en contact avec le TiCl₄ prétraité est telle que le rapport atomique entre l'aluminium contenu dans la composition (C) et le titane contenu dans le TiCl₄ prétraité est généralement d'environ 0,05 à 10, de préférence de 0,1 à 8. Les meilleurs résultats sont obtenus lorsque ce rapport est de 0,2 à 2. La température à laquelle est opérée la mise en contact entre la composition (C) et le TiCl₄ prétraité est généralement d'environ 0 à 60°C, de préférence de 10 à 40°C.

Pour la préparation des solides catalytiques, le matériau liquide obtenu comme indiqué ci-dessus doit être transformé en particules solides. A cet effet, on le soumet à un traitement thermique en présence d'un agent d'activation halogéné.

Les conditions générales du traitement thermique du matériau liquide ne sont pas critiques pour autant que ce traitement induise la précipitation substantielle de particules de solide à base de trichlorure de titane. Ces conditions sont en général également choisies de manière à conduire à des particules sensiblement sphériques, de granulométrie uniforme et de diamètre moyen d'environ 5 à 150 µm, de préférence de 10 à 100 µm.

A cet effet, le matériau liquide est porté progressivement d'une température supérieure à la température de mise en contact de la composition (C) avec le TiCl₄ prétraité à une température qui ne dépasse pas le point d'ébullition du matériau liquide. En général, les températures entre lesquelles le matériau liquide est chauffé s'étendent d'environ 20 à environ 150°C, de préférence de 80 à 120°C environ.

La durée du traitement thermique est généralement d'environ 5 à 200 minutes, de préférence de 30 à 120 minutes. Le traitement thermique peut être effectué en élevant la température du matériau liquide de manière continue ou en observant un ou plusieurs paliers pendant la montée en température.

D'autres détails relatifs au traitement thermique de matériaux liquides apparentés à ceux définis ci-dessus peuvent être notamment trouvés dans le brevet US-A-4115533 (MITSUBISHI CHEMICAL INDUSTRIES) dont le contenu est incorporé par référence à la présente description.

Le traitement thermique du matériau liquide s'effectue en présence d'un agent d'activation halogéné. Par "agent d'activation halogéné", on entend désigner tous les agents dont la présence contribue à transformer substantiellement le trichlorure réduit solide du titane qui se forme au cours du traitement thermique du matériau liquide en la forme delta, violette, de ce solide. Ces agents sont généralement choisis parmi les composés halogénés inorganiques, les composés halogénés organiques, les halogénures d'hydrocarbylaluminiums, les composés interhalogénés et les halogènes, ainsi que leurs mélanges. Parmi ces agents, on peut citer :
- à titre de composés halogénés inorganiques, les halogénures de métaux et de non-métaux, tels que les halogénures de titane, de vanadium, de zirconium, d'aluminium, de silicium et de bore par exemple;
- à titre de composés halogénés organiques, les hydrocarbures halogénés tels que les alcanes halogénés, les tétrahalogénures de carbone et les perhalogénoalcanes par exemple;
- à titre d'halogénures d'hydrocarbylaluminiums, les dihalogénures d'alkylaluminiums dont le radical alkyle contient de 1 à 8 atomes de carbone;
- à titre de composés interhalogénés, les chlorure et bromure d'iode par exemples;
- à titre d'halogène, le chlore, le brome et l'iode.

Des exemples d'agent d'activation adéquats sont le tétrachlorure de titane, le tétrachlorure de silicium, l'iodobutane, le monochloréthane, l'hexachloréthane, le chlorométhylbenzène, le tétrachlorure de carbone, le dichlorure d'éthylaluminium, le chlorure d'iode et l'iode. Les meilleurs résultats ont été obtenus avec le tétrachlorure de titane (TiCl₄). L'hexachloroéthane convient également.

L'agent d'activation peut être ajouté au matériau liquide à n'importe quel moment du traitement thermique, par exemple au début; il peut aussi, notamment lorsque des paliers sont observés au cours de la montée en température, être ajouté tout au long du traitement thermique, en particulier au cours d'un de ces paliers.

Lorsqu'il est fait usage de TiCl₄ à titre d'agent d'activation, ce TiCl₄ peut avantageusement provenir d'un excès non réduit du TiCl₄ initial à partir duquel les solides catalytiques sont préparés.

La quantité d'agent d'activation mise en oeuvre est exprimée par rapport à la quantité de trichlorure de titane présente dans le matériau liquide. Elle est généralement d'environ 0,1 à 20 moles d'agent d'activation par mole de trichlorure de titane, de préférence de 0,5 à 10 moles par mole. Les meilleurs résultats ont été obtenus lorsque l'agent d'activation est mis en oeuvre à raison de 1 à 5 moles par mole de trichlorure de titane.

Il s'est avéré avantageux de soumettre les particules de solide à base de trichlorure de titane complexé issues du traitement thermique du matériau liquide décrit ci-avant à un mûrissage généralement effectué à la température atteinte à la fin du traitement thermique, pendant une durée généralement d'environ 1 minute à 24 heures, de préférence de 30 minutes à 5 heures.

Les particules de solide à base de trichlorure de titane complexé ainsi obtenues sont de préférence séparées de leur milieu de préparation, par exemple par filtration, décantation ou centrifugation, et éventuellement lavées au moyen d'un diluant hydrocarboné inerte de même nature que ceux optionnellement utilisés pour préparer le solide catalytique.

Comme il a été mentionné plus haut, lorsque les conditions opératoires du traitement thermique du matériau liquide ont été ajustées à cet effet, ces particules de solide ont une forme générale sensiblement sphérique, une distribution granulométrique étroite et un diamètre moyen d'environ 5 à 150 µm. Leur teneur en trichlorure de titane est généralement d'au moins environ 50 % en poids, de préférence d'au moins 75 %, et leur teneur en composé électrodonneur ne dépasse généralement pas environ 15 %, de préférence pas 10 %, par rapport au poids total des particules.

La porosité des particules peut être réglée dans une large plage par le choix de certaines conditions opératoires de leur préparation. Il a ainsi été constaté que l'augmentation de la teneur en groupements Y de la composition (C) conduit à une modification de la porosité des particules de solide catalytique, et en particulier à un accroissement de la porosité interne de ces particules générée par des pores dont le rayon est de 1000 à 15000 Å (appelée ci-après plus simplement VPI). Ce procédé de fabrication des solides catalytiques permet donc d'ajuster leur porosité, notamment le VPI, depuis des valeurs aussi faibles que 0,02 cm³/g environ jusqu'à des valeurs aussi élevées que 0,4 cm³/g environ.

On constate également que l'augmentation de la quantité de composition (C) mise en oeuvre conduit avec un rendement plus élevé à l'obtention de particules de solide catalytique de plus petites dimensions et présentant un volume poreux plus faible.

L'accroissement de la porosité des catalyseurs dans la zone des rayons de pores considérée conduit notamment à des polymères du propylène de porosité croissante, ce qui permet d'y incorporer des quantités élevées et croissantes de produits élastomériques sans rencontrer de problèmes de collage.

Diverses variantes peuvent être apportées aux procédés de préparation des solides catalytiques à base de trichlorure de titane complexé décrits ci-dessus.

Une première variante de réalisation (a) consiste à ajouter au milieu de préparation du solide catalytique, de préférence avant le traitement thermique du matériau liquide, un support organique ou inorganique (S) présentant une texture poreuse telle que les particules à base de trichlorure de titane complexé se déposent à sa surface ou précipitent à l'intérieur de ses pores. Cette addition peut par exemple s'effectuer avant la mise en contact du TiCl₄ prétraité avec la composition (C).

Pour ce faire, on utilise généralement des supports (S) dont le volume poreux est d'environ 0,1 cm³/g à 3,5 cm³/g, de préférence de 0,2 à 2,2 cm³/g. Les supports (S) sont généralement constitués de particules de dimension d'environ 5 µm à 350 µm, de préférence de 10 à 200 µm.

Des supports organiques (S) utilisables sont par exemple des polymères préformés. Des supports inorganiques (S) utilisables sont par exemple des solides bien connus comme supports catalytiques, tels que les oxydes de silicium, d'aluminium, de magnésium, de titane, de zirconium et leurs mélanges. Parmi ces supports inorganiques (S), on utilise préférentiellement les solides à base d'alumine et de silice, ainsi que leurs mélanges.

Les supports (S) utilisés dans cette variante du procédé de préparation des solides catalytiques doivent généralement être inertes vis-à-vis des réactifs utilisés dans la synthèse des solides catalytiques. Pour ce faire, il peut être préférable de les soumettre, avant leur utilisation, à un traitement thermique destiné à en éliminer toute trace d'humidité résiduelle. Les solides catalytiques ainsi obtenus présentent un aspect identique à celui des supports utilisés. Leur porosité dépend des conditions de leur préparation et de la nature du support (S) introduit dans le milieu de préparation.

La teneur en trichlorure de titane des solides catalytiques obtenus selon cette variante est généralement d'environ 7 % à 60 %, et la teneur en composé électrodonneur est le plus souvent d'environ 1 à 10 % en poids par rapport au poids total de solide catalytique. Cette variante du procédé de préparation des solides catalytiques constitue un autre moyen d'en régler la porosité.

Une deuxième variante de réalisation (b) consiste à "prépolymériser" les particules de solide catalytique à base de trichlorure de titane complexé. Ce traitement de "prépolymérisation" consiste à mettre les particules en contact avec une alpha-monooléfine inférieure telle que l'éthylène ou, mieux, le propylène, dans des conditions de polymérisation permettant d'obtenir un solide contenant en général d'environ 5 à 500 % en poids environ d'alpha-monooléfine "prépolymérisée". Cette "prépolymérisation" peut avantageusement s'effectuer sur les particules résultant du traitement thermique du matériau liquide dans un éventuel diluant hydrocarboné inerte tel que défini plus haut, pendant une durée suffisante pour obtenir la quantité souhaitée d'alpha-monooléfine prépolymérisée sur le solide.

Cette "prépolymérisation" est particulièrement avantageuse lorsqu'il est fait usage de catalyseurs non supportés, auxquels elle confère une meilleure résistance mécanique.

Une troisième variante de réalisation (c) consiste à soumettre les particules de solide catalytique à base de trichlorure de titane complexé à un traitement d'activation supplémentaire visant à maintenir la stabilité de ses propriétés. Ce traitement d'activation supplémentaire consiste à mettre les particules de solide catalytique en contact avec un agent d'activation supplémentaire choisi parmi les composés organoaluminiques et les produits de la réaction d'un composé organoaluminique avec un composé hydroxyaromatique dont le groupe hydroxyle est stériquement bloqué. Le composé organoaluminique est de préférence choisi parmi les trialkylaluminiums et les chlorures d'alkylaluminiums. Le composé hydroxyaromatique est de préférence choisi parmi les monophénols monocycliques di-tertalkylés et les monoesters de l'acide 3-(3',5'-di-tert-butyl-4'hydroxyphényl)-propionique tels que le 3-(3',5'-di-tert-butyl-4'-hydroxyphényl)-propionate de n-octadécyle.

Il est également possible de combiner certaines des variantes (a), (b) et (c) décrites ci-dessus, par exemple de soumettre les particules de solide catalytique au traitement d'activation supplémentaire simultanément ou consécutivement au traitement de "prépolymérisation" décrit ci-avant.

On trouvera d'autres détails en rapport avec le traitement d'activation supplémentaire défini ci-dessus, notamment en rapport avec la nature des composés organoaluminiques et hydroxyaromatiques, ainsi que les conditions opératoires dans lesquelles on effectue ce traitement, dans les brevets BE-A-803875 (SOLVAY & Cie) et EP-A-0261727 (SOLVAY & Cie) dont le contenu est incorporé par référence à la présente description.

On trouvera des détails pratiques en rapport avec le procédé d'obtention du solide catalytique dans la demande de brevet EP-A-0485006 dont le contenu est incorporé par référence à la présente description.

Le deuxième composant des systèmes catalytiques utilisés pour obtenir les polymères de l'invention est le cocatalyseur, qui comprend au moins un composé choisi parmi les composés organoaluminiques non-halogénés de l'aluminium, et de préférence parmi les composés ou compositions non-halogénées de formule générale

Al Rᵣ Y₃₋ᵣ (VII)

dans laquelle
- R représente un radical hydrocarboné tel que défini ci-avant en rapport avec la composition (C); de préférence ce radical contient de 1 à 18 atomes de carbone; des composés non halogénés de formule (VII) convenant bien comprennent un radical R choisi parmi les radicaux alkyles, aryles, arylalkyles, alkylaryles et cycloalkyles, de préférence R est choisi parmi les radicaux alkyles contenant de 2 à 6 atomes de carbone;
- Y représente un groupement choisi parmi -OR', -SR' et -NR'R" dans lesquels R' et R" représentent chacun un radical hydrocarboné ou un atome d'hydrogène; lorsqu'il s'agit de radicaux hydrocarbonés, R' et R" peuvent être choisis de la même façon que les groupements R' et R" dans la formule (I) de la composition (C).
- r est un nombre quelconque tel que 0 < r ≤ 3.

Les tri-n-alkyl-aluminiums de formule Al R₃, dans laquelle R est un radical alkyle contenant en général de 2 à 6 atomes de carbone, permettent d'obtenir des résultats avantageux. Le triéthylaluminium et le tri-n-butylaluminium sont particulièrement préférés.

Alternativement, les cocatalyseurs peuvent également être choisis parmi les oligomères de type aluminoxanne se présentant sous forme cyclique et/ou linéaire, représentée par les formules générales (V) et (VI) définies ci-avant dans lesquelles R a la même signification que dans la formule (VII) citée plus haut.

Ici encore, les méthyl-, éthyl- et butylaluminoxannes conviennent bien.

On peut également choisir de mettre en oeuvre des mélanges de plusieurs cocatalyseurs différents répondant à ces définitions.

Pour obtenir les polymères de la présente invention on peut utiliser un procédé de polymérisation en phase gazeuse d'oléfines à insaturation terminale contenant de 2 à 18 atomes de carbone, comme les alpha-oléfines telles que l'éthylène, le propylène, le butène, les pentènes et les hexènes, effectué en présence d'un système catalytique selon la présente invention.

Il permet de produire des homopolymères, des copolymères statistiques et des copolymères à blocs.

Les homopolymères sont obtenus par polymérisation d'un seul des monomères oléfiniques définis ci-dessus.

Les copolymères statistiques sont obtenus par polymérisation d'un mélange de deux ou plusieurs monomères choisis parmi les oléfines définies ci-dessus et les dioléfines comprenant de 4 à 18 atomes de carbone.

Les copolymères à blocs sont constitués de deux ou plusieurs blocs distincts de compositions différentes, chaque bloc consistant en un homopolymère ou un copolymère statistique tels que définis ci-dessus. Les blocs sont polymérisés séquentiellement. Avant de polymériser un bloc donné (autre que le premier), on peut éventuellement enlever, partiellement ou complètement, le(s) monomère(s) n'ayant pas réagi au cours de l'étape précédente.

Le procédé de polymérisation selon la présente invention s'applique particulièrement bien à la fabrication de polymères du propylène, qu'il s'agisse d'homopolymères ou de copolymères contenant au moins environ 50 % en poids de propylène.

La polymérisation peut s'effectuer dans des conditions connues en soi : ainsi, la température de polymérisation est généralement choisie d'environ 20 à 200°C, de préférence de 40 à 100°C, les meilleurs résultats étant obtenus de 50 à 95°C. La pression est généralement choisie de la pression atmosphérique à 80 atmosphères, et de préférence de 10 à 50 atmosphères. La polymérisation peut être effectuée en continu ou en discontinu.

Le cocatalyseur et le solide catalytique peuvent être ajoutés séparément ou simultanément au milieu de polymérisation. On peut également les mettre en contact, pendant une durée pouvant valoir de moins d'une seconde à plusieurs heures, à une température d'environ -40° à 80°C, avant de les introduire dans le réacteur de polymérisation.

La quantité totale de cocatalyseur mise en oeuvre n'est pas critique; elle est en général d'au moins environ 0,1 mmole par litre de volume de réacteur, de préférence d'au moins environ 0,5 mmole par litre.

Les quantités de cocatalyseur et de solide catalytique mises en oeuvre sont généralement choisies de telle façon que le rapport molaire entre l'aluminium du cocatalyseur et le titane du solide catalytique (plus simplement désigné par "Al/Ti") soit d'au moins environ 0,5, de préférence d'au moins environ 1, de manière particulièrement préférée d'au moins 2; et que ce rapport soit inférieur à environ 100, de préférence inférieur à environ 50, de manière particulièrement préférée inférieur à 25. Comme annoncé plus haut, on a constaté que l'ajustement de ce rapport molaire Al/Ti permet de régler de manière continue l'indice d'isotacticité des homopolymères : aux plus faibles valeurs du rapport Al/Ti correspondent les plus faibles indices d'isotacticité. Il est ainsi possible d'ajuster l'indice d'isotacticité d'environ 60 % à environ 87 %.

Tout en restant qualitativement inaltérée, l'influence du rapport Al/Ti peut naturellement varier quantitativement en fonction de la nature du cocatalyseur utilisé.

La morphologie du solide catalytique est importante lorsque l'on tente d'obtenir des résines de faible isotacticité ou à forte teneur en comonomère(s) collant(s) conservant une bonne coulabilité.

Le procédé tel que décrit ci-dessus peut être effectué en l'absence ou en présence d'un ou plusieurs agents de réglage de la masse moléculaire (agents de transfert) tels que l'hydrogène, le diéthylzinc, les alcools, les éthers et les halogénures d'alkyle; ces agents permettent de régler la masse moléculaire des polymères. En l'absence de tels agents, on obtient avec une activité très élevée des polymères de très hautes masses moléculaires.

L'objet de la présente invention sont les polymères du propylène obtenus par ces procédés de polymérisation.

Ces polymères peuvent présenter à la fois une faible rigidité et une excellente coulabilité, propriétés jusqu'ici considérées comme contradictoires pour les polymères du propylène.

La rigidité est appréciée par la mesure du module de flexion selon les normes ISO/DIS 178.2-91 sur une éprouvette injectée de 3,2 mm d'épaisseur. Pour les polymères du propylène obtenus par les procédés classiques, ce module de flexion est généralement de l'ordre de 1200 à 1500 MPa pour les homopolymères et de l'ordre de 1100 à 1400 MPa pour les copolymères à blocs propylène-éthylène. Pour les polymères du propylène selon la présente invention, par contre, le module de flexion peut atteindre des valeurs d'environ 600 à 800 MPa pour les homopolymères et descendre jusqu'à environ 100 MPa pour les copolymères à blocs propylène-éthylène.

La coulabilité est mesurée par le temps que mettent 100 g de polymère à s'écouler au travers d'un entonnoir standardisé de 500 cm³ (inclinaison des parois : 15°) (norme ASTM D-1895).

Les procédés de polymérisation décrits ci-avant permettent ainsi d'obtenir, notamment :
- des homopolymères du propylène ayant une isotacticité (mesurée par RMN) d'au moins environ 60 %, plus particulièrement, d'au moins environ 65 %; cette isotacticité étant généralement inférieure ou égale à environ 87 % et de préférence inférieure ou égale à environ 85 %; la coulabilité de ces homopolymères étant généralement inférieure à 1 s;
- des copolymères à blocs du propylène contenant d'environ 10 à 70 % en poids de bloc(s) de copolymère statistique propylène-éthylène (contenant de préférence environ 40 à 60 % en poids d'éthylène, lorsque l'on vise une bonne résistance aux chocs), d'une coulabilité inférieure à 1 s et d'un module de flexion généralement d'environ 100 à 600 MPa. Le premier bloc de ces copolymères à blocs peut notamment être un bloc d'homopolymère faiblement isotactique du propylène (tel que décrit ci-dessus) ou de copolymère statistique contenant au moins 90 % de propylène;
- des copolymères statistiques propylène-éthylène d'une coulabilité inférieure à 1 s et d'une enthalpie de fusion d'environ 25 à 65 J/g, même lorsque la teneur pondérale en propylène de ces copolymères excède 93 %.

Toutes les poudres de polymères du propylène ainsi obtenues présentent une excellente coulabilité (inférieure à 1 s), reflet d'une morphologie contrôlée.

La masse moléculaire des polymères peut être réglée par l'addition au milieu de polymérisation d'un ou plusieurs agents de réglage de la masse moléculaire (agents de transfert) tels que l'hydrogène, le diéthylzinc, les alcools, les éthers et les halogénures d'alkyle.

En l'absence de ces agents, on obtient des polymères du propylène de très hautes masses moléculaires, celles-ci pouvant facilement dépasser la valeur de 10⁶ g/mole, valeur extrêmement élevée pour des polymères du polypropylène. La répartition des masses moléculaires (Mw/Mn) (rapport entre les moyennes en poids et en nombre des masses moléculaires) peut atteindre des valeurs d'au moins environ huit et même d'environ 10 voire environ 12, ce qui représente une distribution plus large que celles obtenues par les procédés classiques. Le fait que les polymères ainsi obtenus soient faiblement isotactiques contribue à ce que que leur ouvrabilité reste satisfaisante malgré leur masse moléculaire très élevée.

Les résines obtenues au départ de polymères selon la présente invention présentent une flexibilité et une résilience élevées, ainsi qu'une bonne tenue à la chaleur. On peut leur appliquer toutes les techniques connues de mise en oeuvre de matières plastiques, telles que l'extrusion, l'injection, le soufflage, le moulage par compression, le calandrage, etc.

Ces résines présentent plusieurs propriétés avantageuses parmi celles-ci, on peut citer la flexibilité et la résilience, obtenues intrinsèquement, sans qu'il soit nécessaire d'y ajouter des quantités importantes de plastifiants ainsi que l'aptitude au scellage des copolymères statistiques, etc. Pour ce dernier point comme pour la mise en oeuvre thermomécanique en général, la faible enthalpie de fusion des résines de l'invention constitue un avantage important. Par ailleurs, l'excellente morphologie interne et externe des poudres de polymère en facilite la manipulation et le stockage, ainsi que l'additivation.

Ces propriétés remarquables ouvrent aux polymères de la présente invention des domaines d'application qui restaient jusqu'ici quasiment inaccessibles aux polymères du propylène, et même à d'autres résines. Parmi ces applications, on peut citer, de façon non limitative : les emballages souples, les films étirés et scellables, les éléments destinés à absorber les chocs, qu'il s'agisse de pièces entières telles que des pare-chocs d'automobile ou de revêtements, appliqués par exemple sur des tableaux de bord d'automobiles; les éléments insonorisants, l'isolation de câbles électriques, les tuyaux souples en tous genres, des applications médicales ou hygiéniques, pour les quelles leur effet barrière vis-à-vis de l'eau et leur discrétion au froissement sont particulièrement avantageux, et bien d'autres encore.

Il est également possible d'incorporer les polymères de la présente invention à des matrices composées d'autres résines pour obtenir des compositions biphasiques ou polyphasiques. Il est ainsi possible de rendre plus résistantes au choc des matrices polymériques relativement rigides.

En ce qui concerne les PP de très haute masse moléculaire mentionnés plus haut, l'un de leurs principaux avantages est que, malgré leur très haute masse moléculaire, leur faible rigidité contribue néanmoins à en assurer une ouvrabilité satisfaisante.

On peut encore choisir d'incorporer aux polymères et compositions décrits ci-dessus une ou plusieurs charges classiques, par exemple des matériaux inorganiques tels que du carbonate de calcium, des renforts fibreux tels que des fibres de verre, des particules conductrices de l'électricité, des pigments, etc.

L'invention est illustrée par les exemples qui suivent. Dans ces exemples, la signification des symboles utilisés, les unités exprimant les grandeurs mentionnées et les méthodes de mesure de ces grandeurs sont explicitées ci-dessous.
- VPI =: volume poreux interne du solide catalytique relevé dans la zone des rayons de pores de 1000 à 15000 Å, exprimé en cm³/g.
- Dm =: diamètre moyen des particules de solide catalytique, en µm.
- VPS =: volume poreux total du support (S) exprimé en cm³/g.
- Ss =: surface spécifique du solide catalytique exprimée en m²/g et mesurée selon la méthode volumétrique de la norme britannique BS 4359/1 (1984).
- Ssu =: = surface spécifique du support (S) exprimée en m²/g norme britannique BS 4359/1 (1984).
- P =: productivité catalytique, exprimée conventionnellement en grammes de polymère insoluble dans le milieu de polymérisation obtenus par gramme de TiCl₃ contenu dans le solide catalytique. Cette grandeur est appréciée indirectement à partir de la détermination par fluorescence X de la teneur résiduelle en titane dans le polymère.
- PSA =: poids spécifique apparent du polymère exprimé en g/dm³.
- MFI =: indice de fluidité en fondu mesuré sous une charge de 2,16 kg à 230°C et exprimé en g/10min (norme ASTM D 1238).
- G =: module de rigidité en torsion du polymère, mesuré à 23°C et pour un angle de torsion de 60° d'arc, la température du moule étant fixée à 70°C et la durée de conditionnement à 5 minutes [norme ASTM D 1043 (1984)]. Ce module est exprimé en daN/cm².
- Et =: radical éthyle C₂H₅.
- Isoamyl =: radical isoamyle (CH₃)₂CH-CH₂-CH₂-
- OIsoamyl =: -OCH₂-CH₂-CH-(CH₃)₂
- TCl,TTi,TAl =: teneurs des résines en chlore, titane et aluminium respectivement (en ppm)
- I.I. =: indice d'isotacticité du polymère, apprécié par la fraction molaire de triades isotactiques (enchaînement séquencé de trois unités monomériques de propylène en configuration méso) dans le polymère total. Cette valeur est déterminée par résonance magnétique nucléaire en 13C comme décrit dans Macromolecules, volume 6, n° 6, page 925 (1973) et dans les références (3) à (9) de cette publication.
- Fl. mod. =: module de flexion, mesuré selon les normes ISO/DIS 178.2-91 sur une éprouvette injectée de 3,2 mm d'épaisseur.
- E₍₋₂₀₎ =: énergie de rupture à -20°C, mesurée par le test PTI selon la norme ISO 6603/2 avec un percuteur de 6,35 mm.
- Transp. =: transparence, mesurée selon la norme ASTM D1746-70 sur des éprouvettes de 2 mm d'épaisseur.

Le diamètre moyen des particules de solide catalytique est estimé par observation au microscope optique de ce solide mis en suspension dans de la décaline (grossissement 200).

La porosité des catalyseurs et celle des polymères obtenus dans les tests de polymérisation décrits ci-après sont mesurées par la méthode de pénétration de mercure au moyen de porosimètres commercialisés par Carlo Erba Co., convenant pour la zone des rayons de pores compris entre 75 et 75000 Å.

La teneur en éthylène des copolymères à blocs est obtenue à partir des signaux caractéristiques de ces unités observés par résonance magnétique nucléaire en 13C comme décrit dans Rubber Chemistry and Technology, volume 44 (1971), pages 781 et suivantes.

### Exemple 1 - Préparation du solide catalytique

### 1 - Préparation de la composition (C)

Dans un réacteur de 2 l équipé d'un agitateur à une pale tournant à 400 tr/min, on introduit sous atmosphère d'azote successivement 800 ml d'un mélange sec d'hydrocarbures aliphatiques bouillant à 175°C (commercialisé sous la dénomination ISOPAR H par EXXON CHEMICALS) et 170 ml de DEAC. Ensuite 82 ml d'alcool isoamylique sont introduits goutte à goutte (en une heure) tout en maintenant la température de la solution inférieure à 50°C.

La solution est conservée à température ambiante, sous agitation et sous balayage d'azote, pendant 16 heures avant son utilisation. Cette composition peut être caractérisée par la formule empirique :

Al Et_{1,45} (OIsoamyl)_{0,55} Cl.

### 2 - Synthèse du solide catalytique

Dans un réacteur sec de 5 l équipé d'un agitateur à une pale tournant à 220 tr/min, on introduit 1 l d'ISOPAR H et 150 ml de TiCl₄. Cette solution de TiCl₄ étant maintenue à 30°C, on introduit lentement (30 minutes) 690 ml de di-isoamyl-éther (EDIA) suivis de 970 ml de la composition (C) décrite ci-dessus. L'introduction de la composition (C) se fait pendant 60 minutes. Après avoir réduit la vitesse d'agitation à 85 tr/min, on introduit, tout en augmentant la température pour atteindre 100°C après 50 minutes, 450 ml de TiCl₄ en 20 minutes. La suspension est maintenue à 100°C pendant deux heures et le solide formé est isolé par décantation puis lavé à l'hexane sec. Ce solide catalytique de couleur violacée contient par kg 830 g de TiCl₃ et 58 g d'EDIA. Son VPI est de 0,07.

### 3 - Prépolymérisation et préactivation du solide catalytique

La totalité du solide catalytique obtenu selon le point 2 (soit environ 317 g de solide à base de TiCl₃ complexé) est mise en suspension dans 1,8 l d'hexane à 30°C, sous une agitation de 150 tr/min.

On procède à la préactivation de la façon suivante. On introduit lentement (en 30 minutes) 780 ml d'une solution dans l'hexane d'un préactivant (appelé ci-après préactivant D) préalablement préparé en mélangeant, par litre d'hexane, 80 g de DEAC et 176 g de 3-(3',5'-di-tert-butyl-4'-hydroxy-phényl) propionate de n-octadécyle commercialisé sous la dénomination IRGANOX 1076 par CIBA-GEIGY. Cette solution est mise en oeuvre 15 minutes après le terme du dégagement gazeux observé au cours de sa préparation.

Après cet ajout, on procède à la prépolymérisation : 240 ml de propylène sont introduits en 30 minutes et la suspension est maintenue sous agitation pendant 30 minutes supplémentaires. Après décantation, le solide catalytique prépolymérisé résultant est lavé à l'hexane sec, avec remise en suspension du solide, puis séché par balayage d'azote en lit fluidisé pendant 2 heures à 70°C.

Le solide catalytique préactivé contient, par kg, 533 g de TiCl₃, 18 g d'EDIA, 228 g de polypropylène ainsi qu'une quantité estimée à 142 g du préactivant D. Le VPI du catalyseur est de 0,09 cm³/g et sa surface spécifique est de 8 m²/g.

### Exemples 2 et 3 - Préparation de solides catalytiques supportés

### 1 - Préparation des compositions (C)

Dans un ballon de 100 ml préalablement conditionné sous azote, on introduit 30 ml d'ISOPAR H et 5,7 ml de DEAC. Cette solution étant maintenue sous agitation à 40°C, on y additionne goutte à goutte 1,2 ml d'alcool isoamylique en trente minutes environ. La solution ainsi obtenue est maintenue sous agitation pendant 12 heures avant son utilisation.

### 2 - Synthèse des solides catalytiques

La nature et la quantité des supports (S) mis en oeuvre dans ces synthèses, leurs caractéristiques et les traitements thermiques auxquels ils sont préalablement soumis sont renseignés dans le tableau I ci-après. Dans un autoclave de 1 litre muni d'un agitateur à une pale tournant à 250 tr/min, préalablement purgé à l'azote, on introduit successivement 160 ml d'ISOPAR H, 23 ml de di-isoamyl-éther et la quantité choisie (telle que renseignée dans le tableau I) de support (S). 20 ml de TiCl₄ sont ensuite ajoutés en 30 minutes à cette suspension.

Cette suspension étant maintenue à 30°C, on y additionne endéans l'heure 35,7 ml de la composition (C) décrite ci-avant. On augmente alors la température pour atteindre 100°C après 1 h.

Le milieu réactionnel est maintenu à cette température pendant deux heures puis ramené à température ambiante. La phase liquide est alors séparée du solide catalytique par décantation et le produit solide est lavé à l'hexane par décantations successives puis séché 1 heure sous courant d'azote à 70°C.

Le solide catalytique ainsi obtenu présente un aspect identique à celui du support; sa couleur est violette. Le tableau I ci-après reprend également les caractéristiques des solides catalytiques obtenus.

**Tableau I**

| Exemples | 2 | 3 |
|---|---|---|
| Caractéristiques des supports (S) | | |
| type | Silice | Alumine-Corindon |
| nom commercial | SG 532 | SAEHS 33-50 |
| Firme | GRACE | CARBORUNDUM |
| VPS | 0,6 | 0,33 |
| Ssu | 320 | 3 |

| Traitement thermique du support (S) | | |
|---|---|---|
| Température (°C) | 800 | 800 |
| durée (h) | 16 | 16 |
| Quantité de support (S) mise en oeuvre | 25 | 90 |

| Caractéristiques des solides catalytiques | | |
|---|---|---|
| Teneur en TiCl₃ (ppm) | 363 | 134 |
| Teneur en EDIA (ppm) | 89 | 16 |
| VPI | 0,01 | 0,10 |
| Ss | 243 | 33 |
| Dm | 20-200 | 10-150 |

### Exemples 4, 5, 6R et 7 à 13 - Homopolymérisation de propylène

On commence par prépolymériser le solide catalytique en phase liquide : pour ce faire, dans un réacteur de 5 l muni d'un agitateur rotatif, purgé à l'azote, on introduit le cocatalyseur et met en route l'agitation (120 tr/min). On purge alors l'azote, on dégaze le réacteur au propylène et on y introduit 1 litre de propylène liquide. On chauffe jusqu'à atteindre la température de prépolymérisation (50°C environ); on introduit à ce moment le solide catalytique dans le réacteur et on laisse la prépolymérisation s'effectuer pendant le temps désiré (10 minutes).

Pour la polymérisation en phase gazeuse proprement dite, on règle la consigne de température à la température de polymérisation (T₁), on dégaze jusqu'à 10 bars et on porte la vitesse d'agitation à 300 t/min. On ajoute alors si nécessaire l'hydrogène. Toujours à la température T₁, on ajoute du propylène de manière à atteindre la pression de polymérisation (P₁). La polymérisation débute alors, et on la laisse se poursuivre pendant la durée désirée.

Dans les essais 4 à 13, on utilise ce mode opératoire avec différents cocatalyseurs (TBA signifiant tri-n-butyl-aluminium). De l'hydrogène n'est présent que dans l'essai 12.

Les solides catalytiques utilisés sont :
- CAT1 :: déposé dans de l'alumine corindon, selon l'exemple 3 ci-dessus
- CAT2 :: en masse, préparé selon l'exemple 1
- CAT3 :: déposé sur de la silice, selon l'exemple 2
- CAT4 et CAT5 :: ces solides catalytiques déposés sont respectivement identiques aux solides catalytiques CAT1 et CAT3, mais ont de plus subi une étape de prépolymérisation supplémentaire, identique à celle décrite dans le paragraphe 3 de l'exemple 1 (sans procéder à la préactivation).

Les conditions opératoires sont les suivantes :

| Essai | Solide cat. | | Cocatalyseur | | T₁ (°C) | Durée (h) | Al/Ti | P₁ (bars) |
|---|---|---|---|---|---|---|---|---|
| | Type | (mg) | Type | (mg) | | | | |
| 4 | CAT1 | 69,7 | TEAL | 153 | 70 | 3 | 3 | 25 |
| 5 | CAT1 | 59,8 | TEAL | 399 | 70 | 3 | 9 | 25 |
| 6R | CAT1 | 53,8 | DEAC | 400 | 70 | 3 | 10 | 25 |
| 7 | CAT2 | 50 | TEAL | 148 | 75 | 4 | 4 | 20 |
| 8 | CAT4 | 22 | TEAL | 48 | 75 | 3 | 2,9 | 20 |
| 9 | CAT5 | 34 | TEAL | 144 | 75 | 3 | 5,8 | 20 |
| 10 | CAT5 | 28,7 | TBA | 653 | 75 | 3 | 17,7 | 20 |
| 11 | CAT5 | 22,1 | TBA | 311 | 75 | 3 | 11,2 | 20 |
| 12 | CAT2 | 41 | TEAL | 178 | 80 | 4 | 5,8 | 25 |
| 13 | CAT2 | 18 | TEAL | 148 | 80 | 4 | 11,1 | 25 |

Les caractéristiques des produits obtenus sont les suivantes :

| Essai | TCl (ppm) | TTi (ppm) | P (g/g) | I.I. % | G (daN/cm²) |
|---|---|---|---|---|---|
| 4 | 18 | 8,1 | 38275 | 69 | < 600 |
| 5 | 27,5 | 14 | 22145 | 74 | 1380 |
| 6R | 260 | 79 | 3924 | 91 | 3000 |
| 10 | 50 | 22.5 | 13780 | 75 | - |
| 11 | 40 | 18 | 17224 | 74 | - |

De plus, dans tous ces essais, la coulabilité des polymères obtenus était inférieure à 1 s.

Les essais 4 et 5 mettent en évidence la productivité extrêmement élevée du système catalytique, la faible teneur des résines en résidus catalytiques, ainsi que les faibles isotacticité et rigidité qu'il permet d'atteindre; leur comparaison montre clairement l'effet du rapport Al/Ti sur l'isotacticité du polymère. Cet effet se constate également avec le TBA (essais 10 et 11), mais avec des différences quantitatives.

Les essais 10 et 11, qui utilisaient du TBA au lieu de TEAL comme cocatalyseur, ont conduit à des homopolymères d'une isotacticité (mesurée par RMN) de respectivement 75 et 74 %, soit sensiblement la même valeur qu'avec le TEAL dans l'essai 5.

Dans l'essai 5, on a en outre mesuré l'enthalpie de fusion (H_{f}) de l'homopolymère obtenu : 74,2 J/g.

L'essai comparatif au DEAC (6R) conduit à une teneur très élevée en résidus catalytiques, et notamment en chlore; à une faible productivité, et à un polymère très rigide et isotactique.

La comparaison des résultats des essais 12, au cours duquel la teneur molaire en H₂ est maintenue à 0,5 %, et 13 (sans hydrogène) permet de constater que la présence d'hydrogène réduit la masse moléculaire des résines, comme en témoignent les mesures de MFI et de viscosité intrinsèque :

| Essai | TTi (ppm) | P (g/g) | MFI | Visco. (l/g) | H₂ (%) |
|---|---|---|---|---|---|
| 12 | 28 | 11072 | 2,3 | 0,246 | 0,5 |
| 13 | 17 | 18237 | < 0,1 | 0,618 | 0 |

On a également mesuré la granulométrie (pourcentage de grains de diamètre supérieur à 2 mm) des produits obtenus dans les essais 7 à 9 :

| Essai | PSA (g/dm³) | TTi (ppm) | P (g/g) | Diamètre > 2 mm | Solide cat. |
|---|---|---|---|---|---|
| 7 | 313 | 13 | 23848 | 2,6 % | CAT2 |
| 8 | 407 | 11,5 | 26960 | 71 % | CAT4 |
| 9 | 405 | 11 | 28184 | 45 % | CAT5 |

On constate clairement que le choix du solide catalytique, et en particulier de son support, conditionne le PSA ainsi que, à productivité comparable, la granulométrie.

Dans ces essais-ci également, la coulabilité était chaque fois inférieure à 1 s.

### Exemples 14 et 15 - Polymérisation de copolymères à blocs

On procède comme décrit dans les essais précédents pour prépolymériser le solide catalytique et polymériser le premier bloc.

La polymérisation du premier bloc s'effectue à T₁=80°C, P₁=25 bars, pendant 3 h, avec le TEAL comme cocatalyseur et les solides catalytiques indiqués ci-dessus. Ces conditions ont pour conséquence de conduire à la formation d'un premier bloc d'une isotacticité de 77 %.

Pour polymériser le second bloc (copolymère statistique propylène-éthylène), on dégaze jusqu'à 2 kg/cm² à la température de polymérisation T₂, et on injecte du propylène puis de l'éthylène dans des quantités telles qu'elles conduiront à l'obtention d'un second bloc de la composition désirée et permettront d'atteindre la pression de polymérisation du second bloc P₂. La polymérisation du second bloc démarre alors que l'on maintient la composition de la phase gazeuse aux valeurs prédéfinies. On la laisse se poursuivre pendant la durée souhaitée.

Dans les deux cas, le cocatalyseur est le TEAL, et on n'utilise pas d'hydrogène.

La polymérisation du second bloc s'effectue à une température T₂=60°C pendant une durée de 2 heures. Le second bloc ainsi obtenu est un polymère statistique de rapport pondéral éthylène/propylène valant environ 45/55. On précise dans le tableau suivant le rapport Al/Ti, la pression de polymérisation du second bloc (P₂), le rapport molaire propylène/(propylène + éthylène) de la phase gazeuse (C₃/Cₜₒₜ), ainsi que les quantités de TiCl₃ et de TEAL mises en oeuvre.

| Essai | Al/Ti | P₂ bars | C₃/Cₜₒₜ | TiCl₃ (mg) | TEAL (mg) | Solide catalytique |
|---|---|---|---|---|---|---|
| 14 | 5,5 | 10 | 0,7 | 20 | 80 | CAT5 |
| 15 | 5,1 | 17,5 | 0,69 | 15 | 57 | CAT4 |

On a mesuré les mêmes caractéristiques que dans les exemples précédents, ainsi que la teneur en poids du copolymère en éthylène (C₂), le module de flexion (Fl.mod.), et l'énergie de rupture à -20°C (E₍₋₂₀₎) :

| Essai | PSA | TTi | TCl | P | C₂ | Fl.mod. | E₍₋₂₀₎ |
|---|---|---|---|---|---|---|---|
| | (g/dm³) | (p.p.m.) | | (g/g) | (%) | (MPa) | (J) |
| 14 | 380 | 5,8 | 13 | 53453 | 16,7 | 180 | 17 |
| 15 | 406 | 5,1 | 11,5 | 60790 | 25,7 | 139 | 14,6 |

On constate que les copolymères à blocs sont obtenus avec une productivité extrêmement élevée, présentent une faible rigidité, et se rompent ductilement.

De plus, la coulabilité des polymères ainsi obtenus était chaque fois inférieure à 1 s.

### Exemples 16 à 18 et 19R à 21R - Polymérisation de copolymères statistiques

Dans ce cas-ci également, on commence par prépolymériser le solide catalytique en phase liquide. Pour ce faire, dans un réacteur de 5 1 purgé à l'azote et muni d'un agitateur rotatif, on introduit le cocatalyseur et met en route l'agitation (120 t/min). On purge alors l'azote, on dégaze le réacteur au propylène et on y introduit 1 litre de propylène liquide. On injecte alors l'éthylène et l'hydrogène de manière à obtenir un mélange gazeux éthylène-propylène-hydrogène aux proportions telles qu'elles conduiront à la synthèse d'un copolymère de la composition désirée. On le chauffe à la température de prépolymérisation (50°C environ), on réajuste les proportions si nécessaire, on injecte le solide catalytique dans le réacteur et on laisse la prépolymérisation s'effectuer pendant la durée souhaitée (10 minutes).

Pour la polymérisation en phase gazeuse proprement dite, on dégaze tout d'abord jusqu'à 16 kg/cm² en chauffant à la température de l'essai (T₁) et on porte la vitesse d'agitation à 300 t/min. On ajoute alors l'hydrogène, l'éthylène et le propylène, des proportions telles qu'elles conduiront à la synthèse d'un copolymère de la composition désirée, jusqu'à atteindre la pression totale voulue.

Le solide catalytique utilisé dans les essais 16 à 18 et 19R à 21R est le solide catalytique CAT1. Pour chacun des 6 essais, la polymérisation s'effectue à 75°C, sous 20 bars, pendant 4 heures, en maintenant la composition de la phase gazeuse aux valeurs prédéfinies. Le cocatalyseur est soit le TEAL (exemples 16 à 18), soit, à titre comparatif, le DEAC (exemples 19R à 21R). On a imposé aux concentrations d'éthylène (C_{2g}) et d'hydrogène (H₂) dans la phase gazeuse les valeurs indiquées dans le tableau suivant :

| Essai | Al/Ti | C_{2g} | H₂ | TEAL | DEAC | TiCl₃ |
|---|---|---|---|---|---|---|
| | | (% molaires) | | (mg) | (mg) | (mg) |
| 16 | 3,2 | 1 | 0,3 | 52 | - | 22 |
| 17 | 3,2 | 3 | 0,2 | 39 | - | 16 |
| 18 | 2,8 | 3 | 0,1 | 37 | - | 18 |
| 19R | 9,3 | 1,5 | 3 | - | 466 | 64 |
| 20R | 19,6 | 1,5 | 3 | - | 644 | 42 |
| 21R | 13,4 | 3 | 3,5 | - | 589 | 56 |

Les résultats sont les suivants :

| Essai | TAl | TTi | C₂ | Tf | Hf | G | P |
|---|---|---|---|---|---|---|---|
| | (p.p.m.) | | (g/kg) | (°C) | (J/g) | | (g/g) |
| 16 | 170 | 12 | 15 | 150 | 56,8 | 755 | 26045 |
| 17 | 80 | 6,4 | 39 | 140 | 36,9 | 345 | 48514 |
| 18 | 50 | 4,5 | 40 | 133 | 29,4 | 210 | 68998 |
| 19R | 530 | 41 | 40 | 140 | 67,2 | > 1500 | 7572 |
| 20R | - | 26 | 40 | 139 | 67,6 | > 1500 | 11976 |
| 21R | 410 | 22 | 67 | 127 | 37,8 | 825 | 14214 |

On constate l'importante productivité, les plus faibles teneurs en résidus catalytiques ainsi que les plus faibles enthalpies de fusion et rigidités obtenue avec le TEAL (exemples 16, 17 et 18) par rapport aux exemples utilisant un cocatalyseur chloré (ex. 19R à 21R), pour une même teneur en éthylène.

Dans tous ces essais, la coulabilité était inférieure à 1 s.

De plus, des mesures de transparence ont donné les résultats suivants :

| Essai | Transp. (%) |
|---|---|
| 16 | 2,1 |
| 17 | 6,4 |
| 18 | 7,3 |
| 21R | 1 |

On constate la nette supériorité des polymères obtenus par un procédé utilisant un système catalytique selon la présente invention.

## Revendications

1. Copolymères à blocs du propylène et de l'éthylène, constitués d'au moins :
- un bloc d'homopolymère du propylène dont l'indice d'isotacticité (mesuré par RMN) est de 87 à 60 % ou de copolymère statistique contenant au moins 90 % de propylène, et
- de 10 à 70 % en poids de bloc(s) de copolymère statistique de propylène et d'éthylène,
et dont le module de flexion est de 100 à 600 MPa et la coulabilité est inférieure à 1 s.

2. Copolymères à blocs selon la revendication 1, dont le(s) bloc(s) de copolymère statistique contiennent de 40 à 60 % en poids d'éthylène.

3. Copolymères à blocs selon les revendications 1 ou 2, dont le bloc homopolymère a une isotacticité de 65 à 85 %.

4. Homopolymères du propylène **caractérisés par** un indice d'isotacticité de 60 à 87 % et une coulabilité inférieure à 1 s.

5. Homopolymères selon la revendication 4, ayant un module de flexion de 600 à 800 MPa.

6. Homopolymères selon l'une quelconque des revendications 4 et 5, dont l'isotacticité est de 65 à 85 %.

7. Homopolymères selon l'une quelconque des revendications 4 à 6, dont l'enthalpie de fusion est de 60 à 80 J/g.

8. Copolymères statistiques du propylène et de l'éthylène dont la coulabilité est inférieure à 1 s et dont l'enthalpie de fusion est de 25 à 65 J/g.

9. Copolymères statistiques selon la revendication 8, contenant plus de 93 % de propylène.

10. Polymères du propylène selon l'une des revendications 1 à 9, **caractérisés par** une masse moléculaire supérieure à 10⁶ g/mole et un rapport Mw/Mn de 8 à 12.

11. Composition comprenant un ou plusieurs polymères selon l'une des revendications 1 à 10.

12. Objet façonné constitué en tout ou en partie d'une composition selon la revendication 11.

## Patentansprüche

1. Blockcopolymere von Propylen und Ethylen, die wenigstens bestehen aus:
- einem Block aus Propylenhomopolymer, dessen Isotaktizitätszahl (gemessen durch NMR) 87 bis 60 % beträgt, oder aus statistischem Copolymer, das wenigstens 90 % Propylen enthält, und
- 10 bis 70 Gew.-% Block(Blöcke) aus statistischem Propylen- und Ethylencopolymer,
und deren Biegemodul 100 bis 600 MPa beträgt und deren Fließfähigkeit kleiner als 1 s ist.

2. Blockcopolymere gemäß Anspruch 1, deren Block(Blöcke) aus statistischem Copolymer 40 bis 60 Gew.-% Ethylen enthält(enthalten).

3. Blockcopolymere gemäß den Ansprüchen 1 oder 2, deren Homopolymerblock eine Isotaktizität von 65 bis 85 % besitzt.

4. Propylenhomopolymere, **gekennzeichnet durch** eine Isotaktizitätszahl von 60 bis 87 % und eine Fließfähigkeit kleiner als 1 s.

5. Homopolymere gemäß Anspruch 4 mit einem Biegemodul von 600 bis 800 MPa.

6. Homopolymere gemäß einem der Ansprüche 4 und 5, deren Isotaktizität 65 bis 85 % beträgt.

7. Homopolymere gemäß einem der Ansprüche 4 bis 6, deren Schmelzenthalpie 60 bis 80 J/g beträgt.

8. Statistische Copolymere von Propylen und Ethylen, deren Fließfähigkeit kleiner als 1 s ist und deren Schmelzenthalpie 25 bis 65 J/g beträgt.

9. Statistische Copolymere gemäß Anspruch 8, die mehr als 93 % Propylen enthalten.

10. Propylenpolymere gemäß einem der Ansprüche 1 bis 9, **gekennzeichnet durch** eine Molekülmasse größer als 10⁶ g/mol und ein Verhältnis Mw/Mn von 8 bis 12.

11. Zusammensetzung, die ein oder mehrere Polymere gemäß einem der Ansprüche 1 bis 10 enthält.

12. Formgegenstand, der ganz oder teilweise aus einer Zusammensetzung gemäß Anspruch 11 besteht.

## Claims

1. Propylene and ethylene block copolymers, composed of at least:
- one block of propylene homopolymer, the isotactic index of which (measured by NMR) is from 87 to 60%, or of random copolymer comprising at least 90% of propylene, and
- from 10 to 70% by weight of propylene and ethylene random copolymer block(s),
the flexural modulus of which is from 100 to 600 MPa and the castability of which is less than 1 s.

2. Block copolymers according to Claim 1, the random copolymer block(s) of which comprise from 40 to 60% by weight of ethylene.

3. Block copolymers according to Claims 1 and 2, the homopolymer block of which has an isotacticity of 65 to 85%.

4. Propylene homopolymers, **characterized by** an isotactic index of 60 to 87% and a castability of less than 1 s.

5. Homopolymers according to Claim 4, having a flexural modulus of 600 to 800 MPa.

6. Homopolymers according to either one of Claims 4 and 5, the isotacticity of which is from 65 to 85%.

7. Homopolymers according to any one of Claims 4 to 6, the enthalpy of fusion of which is from 60 to 80 J/g.

8. Propylene and ethylene random copolymers, the castability of which is less than 1 s and the enthalpy of fusion of which is from 25 to 65 J/g.

9. Random copolymers according to Claim 8, comprising more than 93% of propylene.

10. Propylene polymers according to one of Claims 1 to 9, **characterized by** a molecular mass of greater than 10⁶ g/mol and an Mw/Mn ratio from 8 to 12.

11. Composition comprising one or more polymers according to one of Claims 1 to 10.

12. Shaped object composed in all or in part of a composition according to Claim 11.
